Europäisches Patentamt

European Patent Office

Office européen des brevets

(19)

(11) Numéro de publication: **0 223 119**
**B1**

## (12) FASCICULE DE BREVET EUROPEEN

(45) Date de publication du fascicule du brevet:
03.01.90

(21) Numéro de dépôt: 86114948.2

(22) Date de dépôt: 28.10.86

(51) Int. Cl.⁴: **G07C 1/22**, H04N 3/15,
G04F 13/02

(54) Appareil pour le chronométrage de courses sportives.

(30) Priorité: 04.11.85 FR 8516423

(43) Date de publication de la demande:
27.05.87 Bulletin 87/22

(45) Mention de la délivrance du brevet:
03.01.90 Bulletin 90/1

(84) Etats contractants désignés:
AT CH DE ES GB IT LI NL SE

(56) Documents cités:
EP-A- 0 064 298
DE-A- 2 535 539
US-A- 3 678 189
US-A- 4 009 333

UHRENTECHNISCHE FORSCHUNG UND
ENTWICKLUNG, no. 2, 1972, pages 105-111; F. ASSMUS:
"Ziellinienphotographie, eine unentbehrliche Methode
der objektiven Sportzeitmessung"
THE RADIO AND ELECTRONIC ENGINEER,
vol. 50, no. 5, mai 1980, pages 205-212, Institution of
Electronic and radio Engineers; D.J. BURT:
"Development of c.c.d. area image sensors for 625-line
television applications"

(73) Titulaire: Compagnie des Montres Longines, Francillon
S.A., rue des Jonchères 55, CH-2610 St-Imier Canton de
Berne(CH)

(72) Inventeur: Hügli, Heinz, Chemin Belleroche,
CH-2000 Neuchâtel(CH)

(74) Mandataire: de Raemy, Jacques et al, ICB Ingénieurs
Conseils en Brevets SA Passage Max. Meuron 6,
CH-2001 Neuchâtel(CH)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention est relative à un appareil pour le chronométrage de courses sportives comportant une caméra de prise de vues installée à poste fixe et dont l'axe de l'objectif est dirigé sur une ligne de passage de la course pour enregistrer des événements se produisant sur cette ligne.

Plusieurs appareils répondant à la définition générique ci-dessus ont déjà été proposés. Ils permettent d'obtenir une image de la course au moment où les concurrents franchissent une ligne de passage, plus particulièrement la ligne d'arrivée. L'image rend compte, en plus de l'identité photographique de chacun des coureurs, du rang qu'ils occupent les uns par rapport aux autres grâce à une échelle des temps qui est enregistrée sur la même image.

Un des dispositifs les plus anciens, généralement appelé photofinish, est connu de l'exposé d'invention CH-399 028 (= GB 1.045.434). Il comporte un appareil comprenant une caméra photographique dont le film avance d'un mouvement uniforme, des moyens permettant de ne photographier qu'un espace étroit ou une ligne à la fois et des moyens permettant de projeter des indications de temps pour impressionner le film.

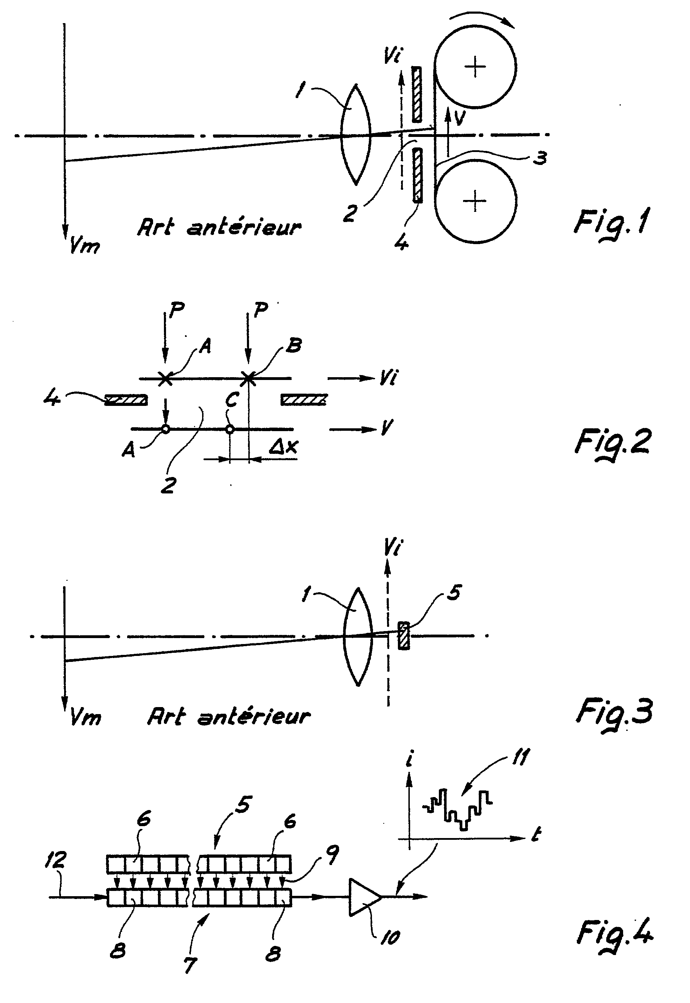

Cet appareil est illustré à la figure 1 de la présente description. Le mobile en mouvement se déplace à la vitesse Vm devant l'objectif 1 de la caméra. Derrière l'objectif se trouve un écran 4 muni d'une fente 2. Derrière la fente défile un film photographique 3. L'image du mobile défile à la vitesse Vi devant l'écran tandis que le film défile à la vitesse V. On s'arrange pour que la vitesse V soit aussi proche que possible de la vitesse Vi. La fente a comme effet que le film ne reçoit qu'une partie de l'image totale vue par l'objectif, cette partie étant une ligne d'image. Le défilement du film derrière la fente a pour effet d'exposer le film avec une même ligne d'image, vue successivement dans le temps. Le photofinish enregistre ainsi une image bidimensionnelle qui représente, selon un axe (perpendiculaire à la figure 1), le profil d'intensité d'une ligne d'image et selon l'autre axe (dans le plan de la figure 1) l'évolution temporelle de ce profil. L'analyse visuelle de l'image permet de reconstituer l'ordre temporel d'apparition de différents mobiles dans le champ de la ligne. Enfin, par l'adjonction sur le film de repères informant sur le temps exact d'enregistrement, l'apparition des différents mobiles peut être mesurée dans le temps. Ce dispositif est utilisé par exemple pour mesurer l'ordre et le temps de passage de concurrents sur une ligne d'arrivée.

Dans le système qui vient d'être décrit, le temps d'exposition Te du film 3 est le temps de transit de ce film derrière la fente 2, soit Te = $\delta$/V, si $\delta$ est la largeur de la fente. Pratiquement, on souhaite un temps d'exposition du film qui soit le plus grand possible, ce qui permettra la prise de vues de sujets peu éclairés ou défilant à grande allure. Ce temps d'exposition est toutefois limité par le flou de l'image matérialisé par exemple par des traînées apparaissant au bord du mobile et qui provient d'un désaccord de vitesse entre la vitesse V du film et la vitesse Vi de l'image du mobile. Ce flou fixe la résolution temporelle de mesure.

Le phénomène du flou peut être expliqué au moyen de la figure 2 qui reprend à échelle agrandie une partie de la figure 1 où l'on retrouve l'écran 4 et la fente 2. Dans cette figure on a représenté un même point P de l'image du mobile qui s'est déplacé de A en B à la vitesse Vi. Pendant le même laps de temps le film est entraîné à ne vitesse V légèrement inférieure à Vi de telle façon que lorsque l'image a progressé de A à B, le film ne s'est avancé que de A à C. Il en résultera une traînée du point P qui va impressionner le film sur une longueur $\Delta x$ qui est une représentation du flou spatial. A ce flou spatial correspond naturellement un flou temporel Tf qui peut être mis en relation avec le temps d'exposition Te du film et qui tient compte de l'écart des vitesses V et Vi. Cette relation s'écrit Tf = $\mu \cdot$ Te

$$\text{où} \quad \mu = \frac{V - Vi}{V}$$

Dans le cas où les vitesses V et Vi sont sensiblement égales, le facteur est voisin de zéro et il s'ensuit que Tf < Te, ce qui signifie que le temps d'exposition est très supérieur au flou temporel.

On prendra ici un exemple pratique tiré d'une course d'athlétisme. Le film de la caméra est réglé à une vitesse V de 35 mm/s. L'image de la course se déroule en réalité à la vitesse Vi de 28 mm/s, ce qui donne un facteur $\mu$ de 0,2. Si l'on se fixe un flou temporel Tf de 1 ms, il en résultera un temps d'exposition Te de 5 ms selon la relation (1) donnée ci-dessus.

Il ressort de ce qui vient d'être dit plus haut que le photofinish tel qu'il est connu aujourd'hui est avantageux pour le temps d'exposition confortable qu'il présente. Toutefois il montre certains inconvénients. Il requiert en effet un développement chimique du film, ce qui retarde l'accès aux résultats de la course. Il nécessite une bonne accessibilité à la caméra, ce qui limite son utilisation à certains emplacements. On peut mentionner aussi son encombrement relativement important et une fiabilité médiocre due aux pièces mécaniques dont il est composé.

Pour pallier les inconvénients cités, le titulaire de la présente invention a proposé dans l'exposé d'invention CH-590 518 un autre système pour la détermination des temps séparant les passages de mobiles au droit d'une ligne de référence sensiblement perpendiculaire à leur trajectoire. Ce système consiste à utiliser une caméra de télévision que l'on braque sur la ligne de référence, à enregistrer les signaux fournis par ladite caméra et, simultanément, des signaux fournis par un garde-temps et à reproduire les signaux à l'aide d'un moniteur. Pour ce faire on utilise une caméra au moyen de laquelle on effectue un balayage linéaire unidirectionnel coïncidant avec la ligne de référence et un lecteur effectuant un balayage linéaire bidirectionnel, de façon que les balayages successifs de la ligne de référence par la caméra soient étalés sur l'écran du lecteur dans une direction perpendiculaire à celle dans laquelle s'effectuent ses balayages unidirectionnels, en l'occurence dans la direction de la trajectoire des mobiles. Le document mentionne que cette caméra peut être d'un type conventionnel, mais où cependant on a permuté les deux balayages de façon que le balayage le plus rapide s'effectue selon une direction verticale, le balayage le plus lent ayant été supprimé. En variante il est dit qu'on utilisera de préférence une caméra à diodes du type dit "solid state".

Ce système est illustré avec les figures 3 et 4 de la présente description. Ici le mobile se déplace à la vitesse Vm devant l'objectif 1 de la caméra. Derrière l'objectif on trouve un dispositif photosensible 5 unidimensionnel à capteur solid state. L'image du mobile défile à la vitesse Vi devant le dispositif 5. La figure 4 montre comment est constitué ce dispositif qui comporte une rangée de capteurs photosensibles élémentaires 6 disposés côte à côte. La lumière incidente issue de la ligne de référence à capter produit des charges sur chacun des capteurs, charges qui représentent le profil d'intensité d'une ligne d'image à un moment donné. Ces charges sont transférées périodiquement dans le sens des flèches 9 sur·un registre à décalage 7 portant autant d'éléments 8 que de capteurs 6. Un signal d'horloge 12 à fréquence élevée évacue vers l'amplificateur 10 le contenu de la ligne sous forme d'un signal vidéo 11. Ces signaux vidéo sont alors mémorisés puis visualisés de manière à représenter, sous forme d'image, l'évolution temporelle de la ligne en observation (ligne d'arrivée par exemple).

Plusieurs dispositifs unidimensionnels sont actuellement disponibles sur le marché. Ils sont tous équipés d'un nombre important de capteurs (> 1000) pour assurer une haute résolution. Pour plus de détails à ce sujet, on se référera aux notices techniques des fabricants, par exemple à la notice concernant le dispositif TH 7803 de Thomson-CSF. Des caméras complètes peuvent même être obtenues auprès de la compagnie Fairchild sous le symbole CCD 1100C à 1500C.

Dans le système qui vient d'être décrit on a vu que la lumière incidente·produit des charges sur la rangée de capteurs 6, charges qui sont transférées périodiquement vers la sortie 10 par l'intermédiaire d'un registre à décalage 7. Le choix de la valeur de cette période, qu'on appellera To, fixe en même temps celui du temps d'exposition Te et du flou temporel Tf qui, puisqu'ici le capteur est immobile, vaut:

$$Tf = Te = To \quad (2)$$

Ainsi, pour reprendre le même exemple suggéré à propos du photofinish et si l'on se fixe un flou temporel Tf de 1 ms, le temps d'exposition Te vaut 1 ms. On comprend que le système unidimensionnel est défavorable par rapport au photofinish puisqu'il présente un rapport Tf/Te égal à 1, alors que ce rapport était égal à $\mu$ dans le système utilisant le photofinish.

Il ressort de ce qui vient d'être dit que le système unidimensionnel discuté plus haut présente une faible sensibilité lumineuse, ce qui limite son domaine d'application à des scènes présentant un éclairement important.

Pour pallier les inconvénients présentés à la fois par les deux systèmes exposés ci-dessus, l'appareil mis en oeuvre selon la présente invention est caractérisé par le fait que la caméra comprend un dispositif photosensible bidimensionnel à transfert de charges comportant une multiplicité de capteurs arrangés en lignes et en colonnes, les lignes étant dirigées parallèlement à l'image de la ligne de passage de la course et les colonnes dans le sens de déroulement de la course et un générateur d'impulsions pour commander le transfert des charges d'un capteur à l'autre dans le sens des colonnes, la fréquence desdites impulsions étant ajustée pour faire correspondre sensiblement la vitesse de transfert des charges à la vitesse de l'image se déplaçant sur le dispositif, un registre à décalage étant disposé en bout de colonnes pour recevoir en parallèle les informations issues desdites colonnes et les transmettre en série, en réponse à un signal d'horloge, à un circuit de sortie pour reconstituer ligne après ligne l'image reçue par le dispositif.

L'invention sera comprise maintenant à la lumière de la description qui suit et des figures qui l'illustrent à titre d'exemple où:

- les figures 1 et 2 représentent l'art antérieur discuté plus haut à propos du système photofinish,
- les figures 3 et 4 représentent également l'art antérieur discuté plus haut à propos du dispositif linéaire ou unidimensionnel à capteurs photosensibles élémentaires,
- la figure 5 est une représentation schématique de l'appareil de prise de vues selon l'invention,
- la figure 6 est une vue de face du dispositif photosensible équipant l'appareil de prise de vues selon l'invention,
- la figure 7 est une vue schématique en perspective de l'appareil selon l'invention et
- la figure 8 est un diagramme représentant les signaux de commande du dispositif en fonction du temps.

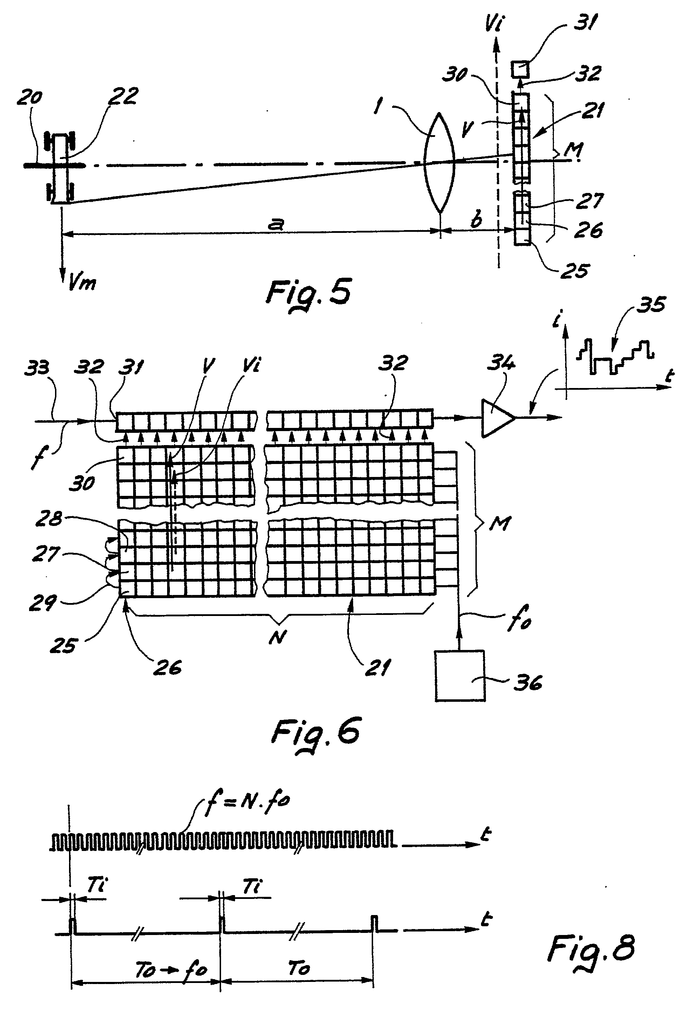

La figure 5 montre schématiquement une caméra de prise de vues agencée selon l'invention pour chronométrage de courses sportives. Cette caméra est installée à poste fixe, l'axe de son objectif 1 étant braqué sur une ligne 20 de passage de la course (départ, poste intermédiaire ou arrivée). Derrière l'objectif 1 on trouve un dispositif photosensible 21 à transfert de charges qui sera décrit plus loin. Un mobile 22 se déplace sur une piste de course à la vitesse Vm. L'image de ce mobile se déplace sur le dispositif photosensible à la vitesse Vi. Si les distances a et b représentent respectivement la distance de l'objectif au mobile et la distance de l'objectif au dispositif, la vitesse Vi vaudra:

$$Vi = \frac{b}{a} Vm.$$

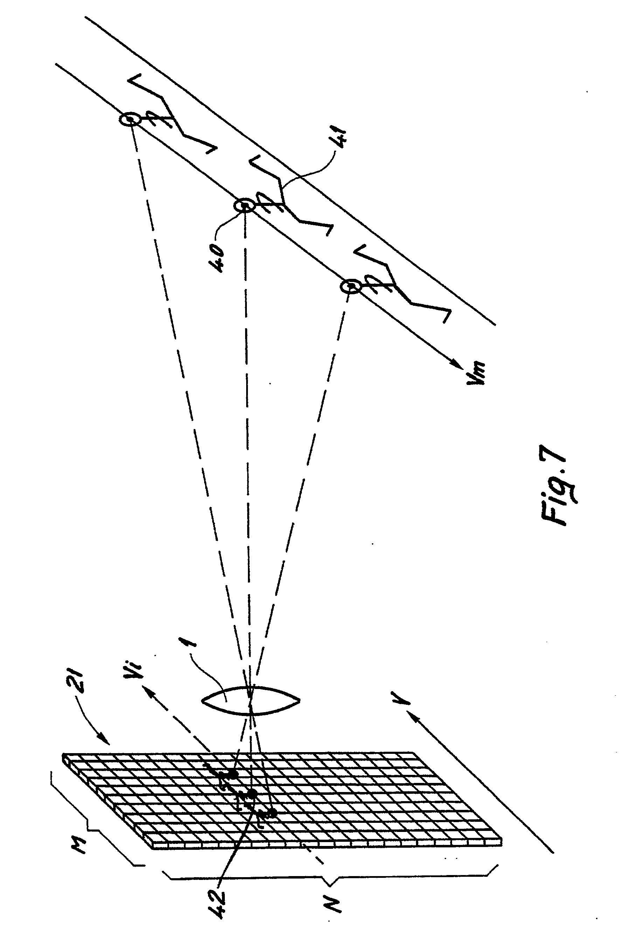

Le dispositif photosensible à transfert de charges est représenté de face en figure 6. Il comporte une multiplicité de capteurs élémentaires arrangés en lignes et en colonnes, soit M lignes et N colonnes. Dans l'arrangement prévu ici les lignes sont dirigées parallèlement l'image de la ligne de passage de la course et les colonnes sont disposées dans le sens de déroulement de ladite course. Ainsi, comme on le voit mieux sur la vue en perspective de la figure 7, l'image de la course défile sur le dispositif 21 dans le sens des M éléments constituant les colonnes.

Le dispositif photosensible 21 bidimensionnel est connu en soi. Une description exemplaire détaillée en est donnée dans une notice technique de "Itek Optical Systems" 10 Maguire Road, Lexington, Mass. 02173, notice intitulée: "VL-96 A, high-performance linear solid-state imaging device". Il est défini par la notice sous le nom de "linear solid-state imaging device using time-delay-and-integrate TDI operation". On appellera ici cet élément: dispositif photosensible bidimensionnel à transfert de charges. Il contient 2048 colonnes et 96 lignes. Chaque capteur élémentaire s'étend sur une surface d'environ 13 x 13 µm². Le dispositif est conçu de telle façon que les charges accumulées sur chacun des capteurs élémentaires peuvent être transférées aux capteurs voisins dans le sens des colonnes. Ainsi, si l'on revient à la figure 6, la charge accumulée sur le capteur 25 de la colonne 26 peur être transférée sur le capteur 27 de la même colonne puis sur le capteur 28 et ainsi de suite selon le sens des flèches 29. Il en est de même et de façon synchrone pour les N colonnes du dispositif. La dernière charge 30 de la colonne 26 est transférée au même rythme que les transferts des autres colonnes à un registre à décalage 31. Ainsi le registre à décalage 31 disposé en bout de colonnes reçoit en parallèle les informations issues desdites colonnes selon le sens des flèches 32. Une fois les information stockées dans le registre à décalage 31, celles-ci sont acheminées en série et en réponse à un signal d'horloge 33 à un circuit de sortie 34, généralement constitué par un transistor JFET. Le signal de sortie de ce transistor se présente sous forme analogique 35 et se trouve représenter les profils d'intensité de la ligne de passage à des instants successifs. Le transfert des charges d'un capteur à l'autre dans le sens des colonnes est réalisé par un générateur d'impulsions 36 dont la fréquence peut être variée.

Un caractère essentiel de la présente invention réside dans l'adaptation de la vitesse de transfert des charges élémentaires représentée par V et commandée par le générateur d'impulsions 36 à la vitesse de déplacement Vi de l'image sur le dispositif photosensible. Si les vitesses V et Vi sont adaptées ou, si l'on préfère, sont égales, on comprendra que chaque charge élémentaire suit toujours le même point de l'objet en mouvement. Ceci est particulièrement apparent sur la figure 7. On prendra comme exemple l'oeil 40 du coureur 41 se déplaçant sur le couloir de course à la vitesse Vm. L'image de cet oeil 42 se déplace à la vitesse Vi après avoir passé l'objectif 1. Si on adapte la vitesse V de transfert de charges d'un capteur à l'autre dans le sens des colonnes N à la vitesse Vi et que chaque colonne contient par exemple 96 capteurs, la charge accumulée par l'intensité lumineuse produite par cet oeil sur le premier capteur sera transférée sur le second capteur qui recevra à ce moment-là également l'image du même oeil et ainsi de suite jusqu'au 96ème capteur. On tire de cet enseignement que le temps d'exposition est multiplié par un facteur égal au nombre de capteurs M existant dans une colonne. Cette augmentation du temps d'exposition permet d'augmenter les performances de prise de vues et de mesure dans une ou plusieurs des caractéristiques suivantes: scènes avec faible éclairement, plus haute résolution d'image, acquisition de scènes affectées de mouvements très rapides.

Si le transfert des charges élémentaires ainsi que la lecture d'une ligne d'image se font à intervalles réguliers de période To, on comprend qu'avec un dispositif photosensible bidimensionnel comportant M capteurs dans le sens d'une colonne, le temps d'exposition Te vaut:

$$Te = M \cdot To$$

Si l'on tient compte de l'écart de vitesse entre V et Vi défini plus haut (photofinish) par

$$\mu = \frac{V - Vi}{V}$$

on peut donner la valeur du flou temporel Tf qui vaut:

$$Tf = To + Te \cdot \mu$$

En remplaçant To par sa valeur on trouve:

$$Tf = Te \left[ \frac{1}{M} + \mu \right] \qquad (3)$$

On voit que le flou temporel comprend l'addition des composantes qui caractérisaient d'une part le photofinish (équation 1) et d'autre part le dispositif unidimensionnel (équation 2) qui ont été décrits dans l'introduction de la présente description. Dans le cas de l'invention le rapport Tf/Te vaut l/M + μ, ce qui permet de dire que le dispositif photosensible bidimensionnel donne des résultats comparables à ceux du photofinish mais sans en présenter les inconvénients. En fait en choisissant un nombre de capteurs M relativement grand, le flou temporel se réduit, comme dans le photofinish à la partie μ • Te. A l'inverse, si l'accord de vitesse est parfait (μ = o) le flou temporel se limite à Te/M.

Ainsi pour reprendre le même exemple suggéré à propos des systèmes connus de l'art antérieur et si l'on se fixe un flou temporel Tf de 1 ms, le temps d'exposition Te pour un facteur μ de 0,2 et un nombre de capteurs M de 96 vaudra 4,76 ms, alors qu'il était respectivement de 5 ms et de 1 ms pour le photofinish et le dispositif unidimensionnel.

On a vu à propos de la figure 6 que le générateur d'impulsions 36 commande le transfert des charges d'un capteur à l'autre. Ces impulsions de courte durée Ti sont représentées sur le diagramme de la figure 8. Elles se répètent à la cadence To qui définit le rythme de transfert. Entre les impulsions de courte durée Ti les charges lumineuses sont accumulées sur chacun des capteurs élémentaires.

Pour lire la ligne du dispositif photosensible qui vient d'être transféré dans le registre à décalage 31, il faut un signal d'horloge dont la fréquence f soit N fois plus élevée que la fréquence fo correspondant à la période To, N étant égal au nombre de colonnes du dispositif. On s'arrangera donc pour que la fréquence du signal d'horloge soit égale à

$$f = N \cdot fo$$

Le générateur d'impulsions 36 délivrant la fréquence fo peut être commandé par le signal d'horloge f par exemple au moyen d'un diviseur par N.

Un exemple tiré d'une course d'athlétisme fera comprendre à quel ordre de grandeur de signaux on a affaire. On a déjà vu que l'image d'une telle course défile sur le dispositif photosensible à la vitesse de 35 mm/s. Si le capteur élémentaire a une surface carrée dont le côté est égal à $13 \cdot 10^{-3}$ mm, le temps To pendant lequel un point de l'image reste en contact avec le même capteur est de $13 \cdot 10^{-3}/35 = 0,371 \cdot 10^{-3}$S, ce qui donne une fréquence de transfert fo = 2695 Hz. Si le dispositif est équipé 2048 colonnes, la fréquence d'horloge sera de $f = 2048 \cdot 2695 \cong 5,5$ MHz. Pour une course de voitures automobiles, la vitesse de l'image peut atteindre 200 mm/s. Pour cette valeur, un calcul semblable donnera fo = 15,4 kHz et f = 31,5 MHz. Il s'agit là probablement de la vitesse la plus élevée qu'on rencontrera dans le domaine d'application de l'appareil selon l'invention. Inversement on notera également la vitesse la plus lente rencontrée lors d'épreuves de canotage et qui est de l'ordre de 4 mm/s et pour laquelle fo = 307 Hz et f = 0,628 MHz.

Des exemples qu'on vient de donner on peut tirer deux remarques:

Tout d'abord, l'appareil selon l'invention, pour être adapté à toutes les compétitions qui peuvent se présenter, doit pouvoir adapter sa vitesse V de lecture à la vitesse Vi de l'image de la course. Cette adaptation pourrait être faite automatiquement par une mesure de la vitesse Vi et un asservissement approprié de V à Vi. Elle pourrait être faite manuellement au moyen d'un bouton de réglage comme cela est pratiqué actuellement avec le photofinish. Que l'on choisisse l'un ou l'autre de ces modes, le réglage portera finalement sur le générateur d'impulsions 36 pour varier sa fréquence fo, par exemple entre 300 et 16'000 Hz pour prendre une marge de sécurité à partir des chiffres avancés plus haut. Ce réglage pourrait aussi porter sur la fréquence f du signal d'horloge puisque f =N • fo et que N est un nombre fixe dépendant du nombre de colonnes portées par le dispositif photosensible. Il faut préciser ici que la fréquence de transfert fo comprise entre 300 et 16'000 Hz s'entend pour un objectif donné et pour une dimension de capteurs bien définie. Si les distances focales a et b définies plus haut sont différentes et si le capteur présente d'autres dimensions que celle de 13 x 13 évoquée ci-dessus, la fréquence de transfert pourra s'étendre entre d'autres limites.

Par ailleurs, chaque ligne d'image est bien définie dans le temps à cause de la fréquence de transfert fo. A chaque ligne correspond donc une heure du jour définie, ce qui permet d'utiliser cette fréquence comme base de temps pour le marquage de l'image en temps. Grâce à cela, il est possible de mélanger l'image de sortie avec une échelle des temps. On comprendra dès lors que le temps le plus court que l'on pourra apprécier sera celui donné par la fréquence de transfert fo puisqu'à chaque transfert correspond une ligne d'image et un temps qui peut être attribué à cette ligne. Ainsi pour les vitesses données en exemple ci-dessus le temps séparant une ligne de la ligne voisine est respectivement de 3,25 ms, 0,37 ms et 0,065 ms pour les disciplines de canotage, d'athlétisme et de courses automobiles.

Le signal analogique de ligne représenté en 35 de la figure 6 est utilisé pour reconstituer l'image du mobile sur un écran selon les techniques connues propres à la télévision. La fréquence ligne sera naturellement synchronisée sur la fréquence de transfert des charges fo. L'image reconstruite peut apparaître sur un écran CRT, être enregistrée magnétiquement par un enregistreur vidéo ou apparaître sur un support papier.

L'image reconstruite peut apparître en noir et blanc ou en couleur. Dans ce dernier cas, on utilisera trois dispositifs photosensibles à transfert de charges, chacun recevant, par exemple par l'intermédiaire de filtres, une couleur fondamentale différente.

## Revendications

1. Appareil pour le chronométrage de courses sportives comportant une caméra de prise de vues installée à poste fixe et dont l'axe de l'objectif (1) est dirigé sur une ligne de passage (20) de la course pour enregistrer des événements se produisant sur cette ligne, caractérisé par le fait que ladite caméra comprend un dispositif photosensible bidimensionnel à transfert de charges (21) comportant une multiplicité de capteurs arrangés en lignes et en colonnes, les lignes étant dirigées parallèlement à l'image de la ligne (20) de passage de la course et les colonnes dans le sens du déroulement de ladite course et un générateur d'impulsions (36) pour commander le transfert des charges d'un capteur à l'autre dans le sens des colonnes, la fréquence (fo) desdites impulsions étant ajustée pour faire correspondre sensiblement la vitesse (V) de transfert de charges à la vitesse (Vi) de l'image se déplaçant sur le dispositif, un registre à décalage (31) étant disposé en bout de colonnes pour recevoir en parallèle les informations issues desdites colonnes et les transmettre en série, en réponse à un signal d'horloge (f), à un circuit de sortie (34) pour reconstituer ligne après ligne l'image reçue par le dispositif.

2. Appareil selon la revendication 1, caractérisé par le fait que les impulsions délivrées par le générateur commandant le transfert de charges sont utilisées comme base temporelle à une échelle des temps correspondant aux événements enregistrés, ladite échelle étant mélangée à l'image issue desdits événements.

3. Appareil selon la revendication 1, caractérisé par le fait que la fréquence du générateur d'impulsions est ajustable manuellement par un opérateur pour adapter la vitesse de transfert des charges à la vitesse de l'image de la course.

4. Appareil selon la revendication 1, caractérisé par le fait que la fréquence desdites impulsions peut être variée entre 300 et 16'000 Hz et que le dispositif photosensible comporte 96 lignes et 2048 colonnes.

## Claims

1. Apparatus for timing sporting events including a motion picture camera installed at a fixed position and having a lens (1), the axis of which is directed on to a line (20) to be crossed by competitors so as to record the events occurring on said line, characterized by the fact that said camera comprises a bidimensional photosensitive charge coupled device (21) including a multiplicity of sensors arranged in rows and columns, the rows being in a direction parallel to said line (20) and the columns in the direction of the running of the course and a pulse generator (36) for controlling the transfer of charges from sensor to sensor along the columns, the frequency (fo) of the pulses being adjusted to effect substantial correspondence between the speed (V) of charge transfer and the speed (Vi) of the image moving over the device, a shift register (31) being arranged at the end of the columns so as to receive in parallel information from said columns and to transmit it in response to a clock signal (f) in series to an output circuit (34) so as to reconstitute row by row the image received by the device.

2. Apparatus according to claim 1, characterized by the fact that the pulses furnished by the generator controlling the charge transfers are employed as a time base at a time scale corresponding to the events being recorded, said scale being blended into the image resulting from said events.

3. Apparatus according to claim 1, characterized by the fact that the frequency of the pulse generator is manually adjustable by an operator so as to adapt the speed of charge transfer to the speed of the course image.

4. Apparatus according to claim 1, characterized by the fact that the frequency of said pulses may be varied from 300 hz to 16000 hz and that the photosensitive device includes 96 rows and 2048 columns.

## Patentansprüche

1. Zeitmeßgerät für den Rennsport mit einer Aufnahmekamera, die ortsfest aufgestellt ist und deren Objektivachse (1) auf eine Durchgangslinie (20) des Rennens gerichtet ist, um Ereignisse aufzuzeichnen, die auf dieser Linie geschehen, dadurch gekennzeichnet, daß die Kamera eine bidimensionale, lichtempfindliche Vorrichtung zum Übertragen von Ladungen (21) mit mehreren Sensoren, die in Linien und in Reihen angeordnet sind, wobei die Linien parallel zum Bild der Durchgangslinie (20) des Rennens und die Reihen in der Richtung des Ablaufes des Rennens ausgerichtet sind, und einen Impulsgenerator (36) zum Steuern der Übertragung der Ladungen eines Sensors an einen anderen in Richtung der Reihen aufweist, wobei die Frequenz (fo) dieser Impulse so eingestellt ist, daß die Geschwindigkeit (V) der Übertragung von Ladungen im wesentlichen mit der Geschwindigkeit (Vi) des Bildes, das sich über die Vorrichtung bewegt, übereinstimmt, und am Ende der Reihen ein Schieberegister (31) angeordnet ist, um die von diesen Reihen abgegebenen Informationen parallel zu empfangen und sie entsprechend einem Taktsignal (f) in Serie an eine Ausgangsschaltung (34) abzugeben, um das von der Vorrichtung empfangene Bild Zeile für Zeile wieder zu bilden.

2. Gerät nach Anspruch 1, dadurch gekennzeichnet, daß die vom die Ladungsübertragung steuernden Generator abgegebenen Impulse als Zeitbasis verwendet werden, in einem Zeitmaßstab, der den aufgezeichneten Ereignissen entspricht, wobei dieser Maßstab mit dem von den Ereignissen stammenden Bild gemischt wird.

3. Gerät nach Anspruch 1, dadurch gekennzeichnet, daß die Frequenz des Impulsgenerators von Hand aus durch eine Bedienungsperson einstellbar ist, um die Geschwindigkeit der Ladungsübertragungen an die Geschwindigkeit des Bildes des Rennens anzupassen.

4. Gerät nach Anspruch 1, dadurch gekennzeichnet, daß die Frequenz der Impulse zwischen 300 und 16 000 Hz geändert werden kann und daß die lichtempfindliche Vorrichtung 96 Linien und 2048 Reihen besitzt.

Art antérieur

Fig.1

Fig.2

Art antérieur

Fig.3

Fig.4

Fig.5

Fig.6

Fig.8

Fig.7